# EUROPÄISCHE PATENTSCHRIFT

(11) **EP 0 928 059 B1**
(45) Veröffentlichungstag und Bekanntmachung des Hinweises auf die Patenterteilung: **12.09.2007**
(21) Anmeldenummer: 99100017.5
(22) Anmeldetag: 04.01.1999
(51) Int. Cl.: H02M 3/28, H02M 3/335, H02M 1/00

(54) **Strom-Spannungswandler und zugehöriger Regelkreis**
Current-voltage converter and relative control circuit
Convertisseur courant - tension et circuit de régulation correspondant

(30) Priorität: 05.01.1998 DE 19800105
(43) Veröffentlichungstag der Anmeldung: 07.07.1999
(60) Teilanmeldung: 05011676.3
(73) Patentinhaber: Kalfhaus, Reinhard, D-63533 Mainhausen (DE)
(72) Erfinder: Kalfhaus, Reinhard, 63533 Mainhausen (DE)
(74) Vertreter: Stoffregen, Hans-Herbert

(56) Entgegenhaltungen:
- EP-A- 0 519 649
- DE-A- 19 505 417
- GB-A- 1 554 835
- US-A- 4 062 057
- PATENT ABSTRACTS OF JAPAN vol. 008, no. 173 (E-259), 9. August 1984 (1984-08-09) & JP 59 067869 A (FUJI DENKI SEIZO KK), 17. April 1984 (1984-04-17)
- CHETTY P R K: "New Power Processor Interfaces MMS Power Module Outputs" IEEE TRANSACTIONS ON AEROSPACE AND ELECTRONIC SYSTEMS, IEEE INC. NEW YORK, US, Bd. AES-23, Nr. 3, Mai 1987 (1987-05), Seiten 311-316, XP002113717 ISSN: 0018-9251

## Beschreibung

Die Erfindung bezieht sich einerseits auf einen Strom-Spannungswandler, insbesondere für hohe Eingangsspannungen, umfassend eine Primärseite, die mehrere in Reihe geschaltete Teilsysteme mit jeweils zumindest einem Transistor-Leistungsschalter und jeweils einer eigenen zugeordneten Transformator-Primärwicklung aufweist sowie eine Sekundärseite über die die Teilsysteme an einen gemeinsamen Lastausgang angekoppelt sind und andererseits auf einen Strom-Spannungswandler, insbesondere für hohe Eingangsströme, umfassend eine Primärseite, die mehrere parallel geschaltete Teilsysteme mit jeweils zumindest einem Transistor-Leistungsschalter und jeweils einer eigenen zugeordneten Transformator-Primärwicklung aufweist, sowie eine Sekundärseite, über die die Teilsysteme an einen gemeinsamen Lastausgang angekoppelt sind.

Bei aus dem Stand der Technik bekannten Spannungswandlern für hohe Eingangswechselspannungen oder Gleichspannung erfolgt eine Aufschaltung eines Spitzenwertes der gleichgerichteten Spannung auf einen unmittelbar an den Ausgängen eines Gleichrichters angeordneten Kondensators mit sehr großer Kapazität. Folglich mussten sehr teure Ladeschaltungen mit Vorladung über zum Beispiel einen Widerstand und anschließende Überbrückung mit Schützkontakten realisiert werden.

Auch sind sogenannte "Doppelbooster"-Topologien bekannt, die einen Zwischenkreis mit einem Elektrolyt-Kodensator aufweisen, so dass dieser oder das vorgeschaltete Netz beim Aufschalten der hohen Eingangsspannung aufgrund des Durchgriffs ohne Kurzschlussstrombegrenzung belastet wird. Daher muss dieser Kondensator auf die Spitzenspannung am Eingang ausgelegt sein, die höher als die geregelte Ausgangsspannung des Boosters ist.

Auch treten bei der Beherrschung hoher Eingangsspannungen und Ströme bezüglich der verwendeten Bauelemente Probleme auf. So müssen die verwendeten Halbleiter wie Transistoren und Dioden an die maximale Eingangsspannung oder Strom angepasst werden und die verwendeten Transformatoren müssen sowohl leistungs- als auch spannungsmäßig an die zu verarbeitende Eingangsspannung angepasst werden, wobei nicht vertretbare Windungs- und Wicklungsspannungen auftreten.

Bei bekannten Wandlern, die Leistungstransistoren als Schaltelemente benutzen, ist die zulässige Eingangsspannung durch die Spannungsbelastbarkeit des verwendeten Leistungtransistortyps begrenzt. Bei einer Reihen- /Parallelschaltung mehrerer, synchron getakteter Transistoren stellt sich das Problem der Spannungs- /Stromsymmetrierung, wozu zum Beispiel die Anbringung verlustbehafteter RCD-Leitungszweige parallel zur Transistorschalt-Strecke bekannt ist.

In der DE 44 14 677 A1 wird ein primärgetakteter Spannungswandler vorgeschlagen, dessen Primärseite aus mehreren, seriell aneinandergeschalteten Teilsystemen aufgebaut ist, die jeweils eine Transistor-Leistungsschalteranordnung beinhalten, denen jeweils eine eigene Transformator-Primänwicklung zugeordnet ist, welche über die Sekundärseite des Wandlers an einen gemeinsamen Lastausgang angekoppelt sind. Die Kopplung bewirkt über die Transformator-Wicklungsspannung eine automatische, dynamische und quasi verlustfreie Spannungssymmetrierung zwischen den Teilsystemen im Lastbetrieb.

Bei dieser Ausführungsform sind die Transformatorwicklungen sekundärseitig "hart"-parallel geschaltet. Dadurch ergibt sich der Nachteil, dass Unsymmetrien zu nicht strombegrenzten dynamischen Ausgleichströmen führen, die aber erst die Symmetrierung bewirken.

Auch ist diese Schaltungsanordnung mit dem Nachteil behaftet, dass bei Wandlern mit Wechselspannungseingang eine Aufschaltung des Spitzwertes der gleichgerichteten Spannung auf einen direkt am Ausgang eines Gleichrichters angeordneten Kondensator mit sehr großer Kapazität erfolgt und alle diese Durchflusswandlertopologien keine der Eingangsspannungs-Kurvenform angepasste Stromaufnahme (Power Factor Correction PFC) zulassen.

Aus der EP-A-0 519 649 ist ein einstufiger, leistungsfaktorverbesserter Konverter mit isoliertem Ausgang bekannt. Der Konverter wird derart betrieben, um Harmonische an einem AC-Eingang durch Steuerung seiner Leistungsschaltung zu reduzieren, so dass ein Strom in einer geschalteten Induktivität im Wesentlichen identisch ist mit der gleichgerichteten Version der Eingangs-AC-Spannungswellenform. Die Spannungsspitzen, welche durch das Schalten der Verlustinduktivität des Leistungstransformators eingeleitet werden, werden durch spezielle Schaltkreise absorbiert. Die dabei entstehende Energie wird an die Ausgangslast weitergegeben.

Die US-A-4 062 057 bezieht sich auf eine gesteuerte Leistungsversorgung mit einer Reihenanordnung von Invertern. Dabei handelt es sich um einen AC-DC-Wandler mit einer Serienanordnung von Invertern, da das Spannungsniveau dieser Inverter in Bezug auf die Größenordnung der DC-Treiberspannung, die entweder als Konsequenz einer gleichgerichteten AC-Spannungsquelle oder anderer Ereignisse zur Verfügung steht. Der Regulator hat selbstbalancierende Eigenschaften, die sicherstellen, dass sämtliche Inverter den gleichen Anteil der DC-Treiberspannung aufnehmen und umfasst ebenfalls Schutzeigenschaften, die den Inverter gegen Zerstörung aufgrund von Fehlfunktionen einer der Einheiten schützen.

Die GB-A-1 554 835 beschreibt einen Inverterschaltkreis. Der als Flyback-Inverter bereichnete Schaltkreis umfasst eine Versorgungsquelle, einen Ausgangsschaltkreis zur Versorgung einer Last, eine Vielzahl induktiver Elemente, welche in Serie mit jeweils einem Schalter parallel zu der Versorgungsquelle geschaltet sind, wobei ein induktives Element eine Energiemenge von der Versorgungsquelle erhält, wenn der zugehörige Schalter reihengeschaltet ist und wirksame Mittel, wenn der mit einem der induktiven Elemente zusammenwirkende Schalter geschlossen wird, um die in der Induktivität gespeicherte Ladung dem Ausgangsschaltkreis zuzuführen.

Die JP-A-59067869 bezieht sich auf einen DC/DC-Konverter. Um einen Stromungleichgewicht eines DC-DC-Konverters bei Verbindung eines eingangsseitigen gemeinsamen Verbindungspunkt zwischen den Konvertereingängen mit dem gemeinsamen Verbindungspunkt zwischen zugehörigen Glättungskondenstoren zu erreichen, wird der eingangsseitige gemeinsame Verbindungspunkt beider Konvertereinheiten und der gemeinsame Verbindungspunkt zwischen den Glättungskondensaloren über ein strombegrenzendes Element miteinander verbunden. Die einzelnen Transistoren der Konverter werden über ein gemeinsames Steuersignal ein- oder ausgeschaltet. Der Strom eines Transistors, welcher beim Ausschalten aufgrund der unterschiedlichen Speicherzeiten der Transistoren verzögert ist, wird auf einen geringen Wert durch das Begrenzungselement begrenzt.

Der Aufsatz von P. R.H. Chetty "New Power Processor Interface MSS Power Modul Outputs", 8083 I.E.E.E. Transaction on Aerospace an Electronic Systems, IEEE Inc. New York, US, Bd. Nr. 3, Mai 1987, beschreibt einen Power-Prozessor zur Verbindung der Ausgänge von einem oder mehrere Ausgänge aufweisenden Spannungsversorgungen mit einer Last,

Die DE-A-195 05 417 A bezieht sich auf ein Schaltnetzteil, insbesondere PFC-bewerteter Tief-/Hochsetzsteller zur Umwandlung einer an einem Eingangskreis anliegenden Eingangsspannung UE in eine an einem mit einer Last CA, LA belasteten Ausgangskreis anliegende geregelte Ausgangsspannung UA. Zur Verbesserung der Netzeigenschaften werden einerseits Spannungsregler einem Rechenglied zur PFC-Bewertung nachgeschaltet und andererseits eine im Eingangskreis gemessene, dem Ausgangsstrom IA proportionale Gleichgröße als Istwert einem Unterlager plus Stromregler zugeführt.

Der vorliegenden Erfindung liegt daher das Problem zu Grunde, einen Wandler für hohe Eingangsspannungen oder -Ströme zur Verfügung zu stellen, der einen einfachen Aufbau aufweist und dessen Spannungs- oder Stromsymmetrierung verbessert wird.

Das Problem wird bei einem Wandler, insbesondere für hohe Eingangsspannungen, erfindungsgemäß dadurch gelöst, dass die in Reihe geschalteten Teilsysteme je einen Zweig mit eingangsseitiger Induktivität und dem zumindest einen Transistor-Leistungsschalter aufweisen, wobei die Induktivitäten zumindest zeitweise über die jeweiligen Transistor-Leistungsschalter elektrisch in Reihe an Eingangsspannung liegen und eine Spannungssymmetrierung zwischen den Teilsystemen bewirken und wobei jeweils ein Ausgang der Teilsysteme mit jeweils der Transformator-Primärwicklung als Trenntransformator zur Stromspeisung verbunden ist.

Das Problem wird bei einem Wandler, insbesondere für hohe Eingangsströme, erfindungsgemäß dadurch gelöst, dass die parallel geschalteten Teilsysteme je einen Zweig mit einer eingangsseitigen Induktivität und dem zumindest einen Transistor-Leistungsschalter aufweisen, der zumindest zeitweise über die jeweiligen Transistor-Leistungsschalter elektrisch parallel an Eingangsspannung U_{E} liegt und eine Stromsymmetrierung zwischen den Teilsystemen bewirkt und dass jeweils ein Ausgang der Teilsysteme mit jeweils der Transformator-Primärwicklung als Trenntransformator zur Stromspeisung verbunden ist.

Diese Topologie bewirkt eine - im Gegensatz zu den bekannten Systemen - Stromspeisung in den Transformator. Das heißt, dass jede Primärwicklung ihren Strom im Durchflusskonzept überträgt und somit auf die sekundäre Bürde einprägt.

Durch zeitsynchrones Ansteuern aller in den Teilsystemen angeordneten Transistor-Leistungsschalter arbeitet jedes Teilsystem mit einer Teilspannung bzw. einem Teilstrom, die bzw. der sich aus der Eingangsspannung U_{E} bzw. Eingangsstrom I_{E} dividiert durch die Anzahl N der in Reihe oder parallel geschalteten Teilsysteme ergibt. Insofern können sowohl für die Auslegung der Transistoren-Leistungsschalter als auch für die Auslegung der Induktivitäten wie Drosselspulen und Trenn-Transformatoren handelsübliche Bauelemente verwendet werden, die nicht Hochspannungsanforderungen genügen müssen. Die Kosten reduzieren sich dadurch erheblich. Wesentlicher Unterschied zu dem Schaltungsaufbau gemäß Stand der Technik ist, dass die Strom-/Spannungssymmetrierung über die eingangsseitige bzw. primärseitige Induktivität bzw. Drosselspule des jeweiligen Teilsystems stattfindet. Unter der Voraussetzung, dass sämtliche zeitweilig in Reihe oder parallel liegenden Drosselspulen die gleiche Induktivität aufweisen und ein synchrones Ansteuern gewährleistet ist, fällt an jeder für eine bestimmte Zeit vom Strom durchflossenen Drosselspule einerseits bei Reihenschaltung ein gleicher Spannungsabfall ab, so dass auch die über den Schaltelementen anliegende Spannung einem N-ten Teil der Eingangsspannung U_{E} entspricht und andererseits fällt bei Parallelschaltung ein gleicher Stromanteil ab, so dass auch die durch die Schaltelemente fließenden Ströme einen N-ten Teil des Eingangsstromes entsprechen.

Bei einer besonders bevorzugten Ausführungsform ist vorgesehen, dass die Teilsysteme als SEPIC-Wandler oder Regenerator ausgebildet sind, wobei zumindest ein Wandler, vorzugsweise der mit Bezugspotential (Masse) verbundene Wandler, mit nur einem Regelkreis verbunden ist, dessen Ausgangssignal mit einer allen Transistor-Leistungsschaltern zugeordneten Ansteuerschaltung verbunden ist.

Bei einer weiteren besonderen Ausführungsform ist vorgesehen, dass der Regelkreis einen mit der Netzspannung verbundenen Schaltkreis zur Erfassung der Netzspannung und/oder der Netzfrequenz aufweist und entsprechende Signale an den Regelkreis weitergibt, so dass der Spannungswandler in Abhängigkeit von der Eingangsspannung entweder als DC-Wandler oder auch als AC-Wandler mit PFC-Bewertung arbeitet. Durch den Einsatz einer mit der Netzleitung verbundenen Erkennungsschaltung wird ein großer Einsatzbereich des Spannungswandlers ermöglicht. Dadurch kann das Spannungswandlersystem speziell im Bahnbereich an zumindest vier UIC-Spannungen (1000 VAC 16 2/3 Hz; 1500 VAC 50 Hz; 1500 VDC; 3000 VDC) betrieben werden.

Das neuartige Spannungswandlersystem ist daher in der Lage, sich an verschiedene Eingangsspannungen und/oder Frequenzen mit der Stromaufnahme anzupassen. Auch wird ermöglicht, dass Regelparameter auf die jeweilige Nennspannung voreingestellt werden können.

Zur PFC-Bewertung ist vorgesehen, dass zumindest einer weiteren, mit der eingangsseitigen Drosselspule magnetisch gekoppelten Drosselspule ein Messelement wie Shunt zugeordnet ist, an dem eine dem Ausgangsstrom I_{A} proportionale Größe I_{A}', vorzugsweise DC-Größe, - abgreifbar ist. Auch hier ergibt sich wiederum der Vorteil, dass eine PFC-Regelung bei beliebiger Eingangswechselspannung möglich ist. Das Messelement ist vorzugsweise in dem mit Bezugspotential verbundenen Teilsystem angeordnet. Die Größe I_{A}' kann auch einen AC-Anteil aufweisen, der proportional zum Eingangsstrom I_{E} ist, d. h. einer Sinushalbwellenfunktion erfolgt.

Ein weiterer Vorteil des Einsatzes von SEPIC-Wandlern in dem hier vorgestellten Spannungswandlersystem ist darin begründet, dass der ansonsten übliche primäre Speicherkondensator am Ausgang des Gleichrichters oder im Zwischenkreis auf die Niedervoltseite bzw. Sekundärseite transformiert und dort kurzschlussstromgeregelt aufgeladen wird. Dadurch wird der ansonsten vorhandene Speicherkondensator dem primären direkten Zugriff der Eingangsspannung entzogen. Aus diesem Grunde kann auf Elektrolyte am Eingang verzichtet werden (Hochvoltkreis) und die Elektrolyte werden in den Sekundärkreis (Niedervoltkreis) transformiert. Im Sekundärkreis können preiswerte Elektrolytkondensatoren eingesetzt werden.

Durch die eingangsseitige Reihen- oder Parallelschaltung der die Trenntransformatoren ansteuernden Wandler können die Wandler selbst auf 1/N-fache Gesamtleistung ausgelegt sein, wobei N der Anzahl der in Reihe oder parallel geschalteten Teilsysteme entspricht.

Auch die Windungsspannung bzw. der Wicklungsstrom der einzelnen Strom-Trenntransformatoren kann entsprechend geringer ausgelegt werden.

Bei einer bevorzugten Ausführungsform ist vorgesehen, dass die Ausgangsspannung des Strom-Spannungswandler-Systems auf verschiedene Ausgangsspannungen einstellbar ist. Dies wird insbesondere aufgrund der Ansteuerung der in den Teilsystemen angeordneten Transistor-Leistungsschalter bewirkt. Auch besteht die Möglichkeit einer Primärwicklung auf einem Kern mehrere Sekundärwicklungen unterschiedlicher Windungszahlen zuzuordnen.

Es ist vorgesehen, dass die in den Teilsystemen enthaltenen Transistor-Leistungsschalter über auf einen gemeinsamen Kern angeordnete Übertrager ansteuerbar sind, wodurch ein zeitsynchrones Ansteuern der in Reihe oder parallel geschalteten Transistor-Leistungsschalter sichergestellt ist. Des Weiteren ist vorgesehen, dass die Primär-Wicklung des Trenntransformators über eine Diode an einen jeweiligen Ausgang der SEPIC-Wandler angekoppelt ist. Dadurch wird sichergestellt, dass Rückströme des Trenntransformators keine negativen Auswirkungen auf den SEPIC-Wandler haben und der Strom-Trenntransformator freier entmagnetisieren kann.

Des Weiteren ist vorgesehen, dass die Primärwicklungen auf einen gemeinsamen Kern gewickelt werden und auf eine Sekundärwicklung arbeiten.

Ein Regelkreis für einen Strom-Spannungswandler der oben beschriebenen Art umfasst einen Spannungsregler mit Spannungsvergleicher und Spannungsverstärker sowie einen Stromregler mit Stromvergleicher und Stromverstärker sowie ein zwischen Spannungsregler und Stromregler angeordnetes Korrekturglied.

Der Regelkreis weist einen Schaltkreis zur Erfassung der Netzspannung und/oder Netzfrequenz auf, wobei der Schaltkreis mit einer Abtastschaltung verbunden ist, die mit einem Eingang an Ausgangsspannung liegt und mit einem Ausgang mit dem ersten Eingang eines Spannungsvergleichers verbunden ist und wobei der Spannungsregler ausgangsseitig mit einem vorzugsweise multiplizierendem D/A-Wandler verbunden ist, der seinerseits mit einem zweiten Eingang mit einem Ausgang des Schaltkreises verbunden ist und ausgangsseitig mit einem Eingang des Stromvergleichers des Stromreglers verbunden ist.

Durch die Erkennung von Netzspannung und Netzfrequenz kann der Regelkreis auf verschiedene Eingangsspannungen und/oder -frequenzen eingestellt werden. Die entsprechenden Regelparameter werden durch den Schaltkreis zur Verfügung gestellt. Eine PFC-Bewertung kann somit bei beliebiger Eingangswechselspannung (Amplitude, Bereich und Frequenz) durchgeführt werden. Alternativ kann auch die gleichgerichtete Eingangsspannung (nach dem Gleichrichter) abgetastet bzw. erfasst werden.

Um eine genaue Ermittlung der Netzspannung und der Netzfrequenz zu gewährleisten - die Netzspannung kann auch eine DC-Spannung sein - ist der Schaltkreis als integrierte Schaltung, vorzugsweise als Mikrocomputer bzw. Mikrocontroller ausgebildet. In Abhängigkeit der ermittelten Netzparameter wird eine synthetische Funktion mit konstanter Amplitude B (bei DC-Eingang) oder eine pulsierende Sinusfunktion Bₘₐₓ |sin(ωt)| (bei AC-Eingang) in Phase und synchron mit dem Netzeingang zur Verfügung gestellt, der die tatsächliche synchronisierte Netzfrequenz repräsentiert. Die an dem Ausgang des Spannungsverstärkers anliegende fehlerverstärkte Spannungsdifferenz kᵤ x _U_{A} kann sodann mit der am Ausgang des Mikrocontrollers zur Verfügung gestellten digitalen Sinusfunktion multipliziert werden. Dazu ist dem Spannungsverstärker der D/A-Wandler nachgeschaltet, dem der digitale Sinus des Schaltkreises zugeführt wird. Am Ausgang des D/A-Wandlers ist eine sinusmodulierte fehlerverstärkte Spannung abgreifbar, die als Sollwert für den nachgeschalteten Strom-Regelkreis zur Verfügung steht.

Die Regelkreisanordnung weist den Vorteil auf, dass eine Korrektur aufgrund von Eingangsspannungsänderungen nicht notwendig ist. Insbesondere benötigt das Korrekturglied keine Korrektur als Funktion der Eingangsspannung U_{E}. Auch der dem Regelkreis zugeführte Ist-Strom I_{Alst} ist unabhängig von Schwankungen der Eingangsspannung U_{E}.

Es ist vorgesehen, dass in dem Schaltkreis vorprogrammierte Sinusfunktionen abgelegt sind, wobei die digitalen Werte in dem den Spannungsverstärker nachgeschalteten D/A-Wandler multipliziert und verrechnet werden.

Auch ist vorgesehen, dass der in dem Schaltkreis erzeugte synthetische Sinus als Referenz für eine kontinuierliche Unter- bzw. Überspannungserkennung herangezogen wird.

Des Weiteren weist der Regelkreis eine in dem Schaltkreis integrierte Komparatorschaltung auf, mit der der am Ausgang des Schaltkreises anliegende synthetische Sinus zum Netz synchronisiert wird.

Weist die Netzspannung keine Nulldurchgänge auf, d. h. es handelt sich um eine Eingangsgleichspannung, so gibt der Schaltkreis einen konstanten Wert B aus, so dass der Regelkreis als DC-Regelkreis arbeitet und eine PFC-Bewertung in diesem Fall nicht stattfindet.

Durch die obigen Maßnahmen kann der Einsatzbereich des Spannungswandlersystems erheblich erweitert werden, so dass speziell im Bahnbereich zumindest vier UIC-Spannungen (1000 VAC 16 2/3 Hz, 1500 VAC 50 Hz, 1500 VDC, 3000 VDC) oder 48/60/110/220V DC und 110/234 VAC 60/50 Hz Netze als Einspannungsbereichswandler beherrschbar sind. Da der Wandler bzw. Regenerator sehr weite Eingangsspannungsbereiche zulässt, wird die Problematik, ob DC-Eingangsspannung oder AC-Eingangsspannung mit verschiedener Frequenz durch vorgenannten Lösungsweg gelöst, so dass alle vier Spannungsbereiche plus Toleranzen (+/- 30 %) und Langzeittransienten in einem Eingangsspannungsbereich abgearbeitet werden können. Auch DC-Eingangsspannungen mit besonders hohem Wechselspannungsanteil vorzugsweise ohne Spitzenströme sind beherrschbar. Auch besteht die Möglichkeit, dass einige Regelparameter auf die Nennspannung voreinstellbar sind (Ton-Zeit).

Vorzugsweise wird ein Regelverfahren eingesetzt, bei dem die primären Teilsysteme im nichtstromlückenden Betrieb betrieben werden und erstmalig eine Kaskadierung solcher Teilsysteme erfolgt. Bei den Teilsystemen handelt es sich nämlich um "drosselbewertete" Topologien, die zum Eingang hin nicht stromlückend sind. Auch wird erfindungsgemäß die PFC-Bewertung der kaskadierten Teilsysteme einstufig an nur einem Teilsystem durchgeführt, wodurch jedoch das Gesamtsystem PFC-bewertet wird.

Eine Rückführung von Regelgrößen oder Überwachungsfunktionen mit aufwendigen potentialtrennenden Maßnahmen ist nicht erforderlich. Dies wird dadurch erreicht, dass der Ausgangsstrom als Average-Größe auf der Primärseite messbar ist. Auch kann die Ausgangsspannung primärseitig während der T_{Off} -Zeit an der primärseitigen Transformatorwicklung gemessen werden. Vorteilhaft kann die Eingangsspannung U_{E} während der T_{On}-Zeit sekundärsseitig an einer sekundären Wicklung gemessen werden.

Eine Korrektur des Regelkreises über die Eingangsspannung U_{E}, wie sie bei den Regelkreisen gemäß dem Stand der Technik bekannt ist, kann bei dem erfindungsgemäßen Regelkreis entfallen, da die Netzspannung/Eingangsspannung durch den Schaltkreis vorgegeben wird und die dem Ausgangsstrom proportionale Größe von Schwankungen der Eingangsspannung unabhängig ist.

Weitere Einzelheiten, Vorteile und Merkmale der Erfindung ergeben sich nicht nur aus den Ansprüchen, sondern auch aus der nachfolgenden Beschreibung der aus den Figuren zu entnehmenden bevorzugten Ausführungsbeispielen.

Es zeigen:
- Fig. 1: einen kaskadierten Strom-Spannungswandler mit drei primärseitig in Reihe geschalteten Teilsystemen, wobei die Teilsysteme als SEPIC-Wandler ausgebildet sind,
- Fig. 2: einen Strom-Spannungswandler mit drei primärseitig parallel geschalteten Teilsystemen und
- Fig. 3: eine Regelkreisanordnung für zumindest ein Teilsystem des Spannungswandlersystems gemäß Fig. 1 oder Fig. 2.

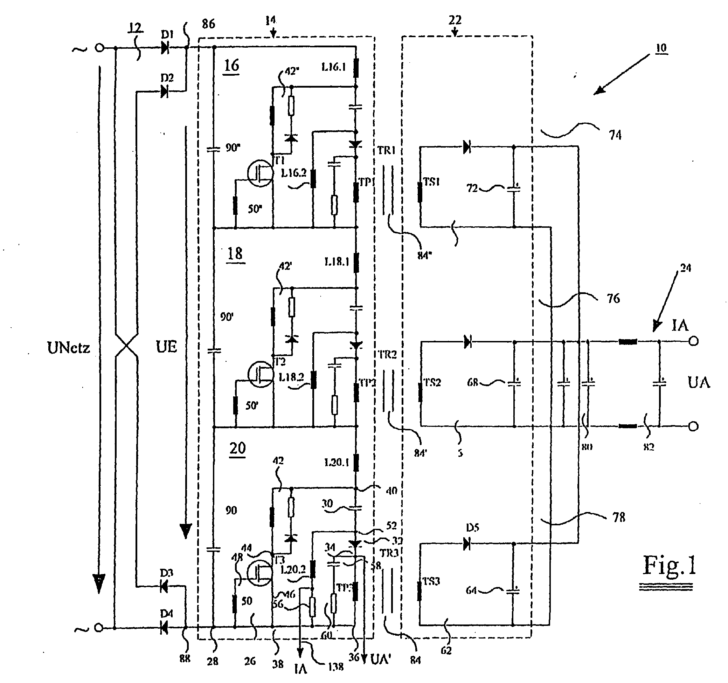

Fig. 1 zeigt einen Strom-Spannungswandler 10, der über einen Dioden D1 bis D4 umfassenden Gleichrichter 12 mit einer Netzspannung U_{Netz} verbunden ist. Die Netzspannung U_{Netz} liegt bei dieser Ausführungsform typisch im Bereich von 1000 bis 1500 VAC und kann eine Frequenz von 16 2/3 Hz bis 400 Hz aufweisen. Auch sind Eingangsspannungen im Bereich von 1500 VDC bis 3000 VDC möglich. Am Ausgang des Gleichrichters 12 liegt in dem hier dargestellten Ausführungsbeispiel eine sinusförmig pulsierende, halbwellenförmige Eingangswechselspannung U_{E} an, die mittels des Spannungswandlers 10 in eine konstante Ausgangsspannung U_{A} umgewandelt wird.

Der Strom-Spannungswandler 10 weist eine Primärseite 14 auf, die mehrere in Reihe geschaltete Teilsysteme 16, 18, 20 aufweist, die jeweils zumindest einen Transistor-Leistungsschalter T1, T2, T3 aufweisen. Die Teilsysteme 16, 18, 20 sind in dem hier dargestellten Ausführungsbeispiel als SEPIC-Wandler bzw. Regeneratoren ausgebildet, deren Ausgang jeweils mit einer Primärwicklung TP1, TP2, TP3 eines Trenntransformators TR1, TR2, TR3 verbunden ist. Die Trenntransformatoren TR1, TR2, TR3 weisen jeweils Sekundärspulen TS1, TS2, TS3 auf, die über eine Sekundärseite 22 des Spannungswandlers 10 an einen gemeinsamen Lastausgang 24 angekoppelt sind.

Im Folgenden wird beispielhaft der Aufbau eines SEPIC-Wandlers anhand des Teilsystems 20 beschrieben. Das Teilsystem 20 umfasst einen SEPIC-Wandler 26, einen primärseitigen Eingang 28 an dem eine Induktivität wie Eingangsdrossel L20.1 angeschlossen ist, die über einen Kondensator 30 und eine Diode 32 mit einem ersten Anschluss 34 der Transformator-primärwicklung TP3 verbunden ist. Ein weiterer Anschluss 36 ist mit einem primärseitigen Ausgang 38 des SEPIC-Wandlers 26 verbunden. Zwischen der eingangsseitigen Drossel L20.1 und dem Kondensator 30 liegt eine Verbindungsstelle 40, die über ein Vorschaltnetzwerk 42 mit einem ersten Anschluss 44 des Transistor-Leistungsschaltelementes T3 verbunden ist. Ein weiterer Anschluss 46 des Transistor-Leistungsschalters T3 ist mit dem Ausgang 38 verbunden. Ein Steuereingang 48 des Transistor-Leistungsschalters T3 ist über eine Sekundärwicklung eines Übertragers 50 mit dem Ausgang 38 verbunden. Zwischen dem Kondensator 30 und der Diode 32 liegt eine Verbindungsstelle 52, die über eine zweite Drossel L20.2 und einen Widerstand 56 wie Shunt mit dem Ausgang 38 verbunden ist. Parallel zu der primärseitigen Transformatorwicklung TP3 ist ein Entlastungsnetzwert als Reihenschaltung aus Kondensator 58 und Widerstand 60 angeordnet.

Sekundärseitig ist die Sekundärwicklung TS3 des Trenntransformators TR3 mit einer Spitzenwert- Gleichrichtschaltung 62 bestehend aus der Diode D5 verbunden, an dessen Ausgang ein Kondensator 64 liegt. Der Sekundärwicklung TS2 ist ebenfalls eine Gleichrichtschaltung 66 nachgeschaltet, an deren Ausgang ein Kondensator 68 liegt. Gleiches gilt für die Sekundärwicklung TS1, der eine Gleichrichtschaltung 70 nachgeschaltet ist, an dessen Ausgang ein Kondensator 72 liegt. Die Sekundärseite 22 besteht im wesentlichen aus drei Sekundärsystemen 74, 76, 78, bestehend aus jeweils der sekundären Transformatorwicklung, dem zugehörigen und zugeordneten Gleichrichter und dem Ausgangskondensator. Die Sekundärsysteme 74, 76, 78 sind elektrisch parallel geschaltet und bilden einen Ausgang 80, an dem über ein Filternetzwerk 82 die geregelte Ausgangsspannung U_{A} abgreifbar ist. Die Kondensatoren 64, 68,72 können auch als einzelner gemeinsamer Kondensator mit großer Kapazität ausgelegt werden.

Vorzugsweise sind die Wicklungen der Trenntransformatoren auf einen separaten Transformatorkern 84, 84', 84" angeordnet. Alternativ besteht jedoch die Möglichkeit, die Wicklungen bei entsprechendem Verhältnis der Spannungen und Ströme auf einem gemeinsamen Kern anzuordnen.

Durch die primärseitige Reihenschaltung der Regeneratoren bzw. SEPIC-Wandler mit Potentialtrennung reduziert sich die an einem Transistor-Leistungsschalter T1, T2, T3 abfallende Spannung auf ein Drittel der Eingangsspannung U_{E}. Aus diesem Grund können Transistoren mit handelsüblicher Spannungsfestigkeit eingesetzt werden. Durch zeitsynchrones Ansteuern der primärseitigen Teilsysteme 16, 18, 20 über die Übertrager 50, 50', 50" liegt jede Stufe an einem Drittel der Eingangsspannung U_{E}. Um ein zeitsynchrones Ansteuern zu erreichen, sind Ansteuer-Wicklungen der Übertrager 50, 50', 50" auf einem gemeinsamen magnetischen Kern angeordnet. Alternativ besteht jedoch die Möglichkeit, die Ansteuerwicklungen als getrennte Transformatoren auszubilden, speziell bei sehr hohen Eingangsspannungen.

Beim Ansteuern der Transistor-Leistungsschalter T1, T2, T3 fließt ein Strom von dem positiven Pol 86 des Gleichrichters 12 über eine Eingangsdrossel L16.1 des Teilsystems 16, ein Vorschaltnetzwerk 42" und den Transistor-Leistungsschalter T1, sowie über die Eingangsdrossei L18.1, das Snubbernetzteil 42' und den Transistor-Leistungsschalter T2 sowie über die Eingangsdrossel L20.1, das Vorschaltnetzteil 42 und den Trankistor-Leistungsschalter T3 zu dem negativen Pol 88 des Gleichrichters. Da der Strom durch die Eingangsdrossel L20.1, L18.1 und L16.1 identisch ist, wird - gleiche Induktivitäten der Drosselspulen und synchrone Ansteuerung der Transistor-Schaltelemente T1, T2, T3 vorausgesetzt - an jeder Drosselspule L16.1, L18.1, L20.1 die gleiche Spannung abfallen, wodurch auch an den Transistor-Leistungsschaltem T1, T2, T3 ein gleicher Spannungsabfall eingestellt wird.

Parallel zu den Eingängen der jeweiligen Teilsysteme 16, 18, 20 liegen bei DC-Eingang die Kondensatoren 90, 90', 90", an denen jeweils nur 1/3 der Eingangsspannung U_{E} abfällt. Im vorliegenden Fall wird der ansonsten übliche sehr große Speicherkondensator dem primären direkten Zugriff der Eingangsspannung entzogen und auf die Niedervolt- bzw. Sekundärseite transformiert und dort kurzschlussstromgeregelt aufgeladen.

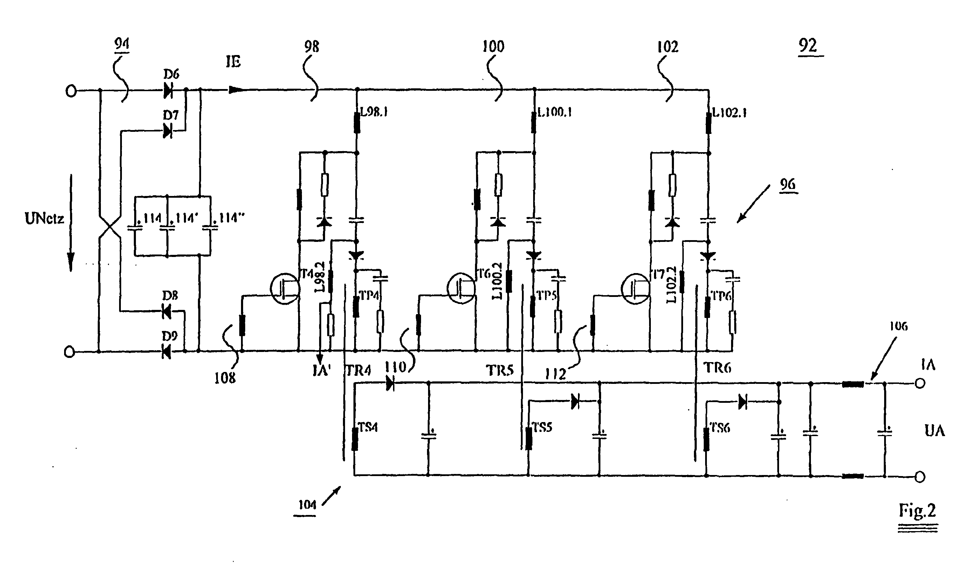

In Fig. 2 ist ein Strom-Spannungswandler 92 dargestellt, der über einen Gleichrichter 94 mit den Dioden D6 - D9 mit Netzspannung U_{Netz} verbunden ist. Bei diesem Ausführungsbeispiel liegt die Netzspannung U_{Netz} typischerweise im Bereich von 110 - 234 VAC oder 28 - 48 VAC und kann eine Frequenz von 16 2/3 Hz - 400 Hz aufweisen. Auch sind Netzspannungen im Bereich von 4 - 72 oder 14,4 - 154 VDC möglich. Der Strom-Spannungswandler 92 ist insbesondere für hohe Eingangsströme I_{E} bzw. Ausgangsströme I_{A} konzipiert.

Der Strom-Spannungswandler 92 weist eine Primärseite 96 auf, die mehrere parallel geschaltete Teilsysteme 98, 100, 102 aufweist, die jeweils zumindest einen Transistor-Leistungsschalter T4, T6, T7 aufweisen. Die Teilsysteme 98, 100, 102 sind in dem hier dargestellten Ausführungsbeispiel als SEPIC-Wandler bzw. -Regeneratoren ausgebildet, deren Ausgang jeweils mit einer Primärwicklung TP4, TP5, TP6 eines Trenntransformators TR4, TR5, TR6 verbunden ist. Die Trenntransformatoren TR4, TR5, TR6 weisen jeweils Sekundärspulen TS4, TS5, TS6 auf, die über eine Sekundärseite 104 des Spannungs-Stromwandlers 92 an einen gemeinsamen Lastausgang 106 angekoppelt sind.

Der Aufbau der Teilsysteme 98, 100, 102 entspricht im Wesentlichen den Teilsystemen 16, 18, 20, die mit Bezug zu Fig. 1 ausführlich beschrieben wurden. Durch die primärseitige Parallelschaltung der Regeneratoren bzw. SEPIC-Wandler 98, 100, 102 mit der Potentialtrennung reduziert sich der durch einen Transistor-Leistungsschalter T4, T5, T6 fließende Strom auf ein Drittel des Eingangsstroms I_{E}. Aus diesem Grund können Transistoren mit handelsüblicher Stromfestigkeit eingesetzt werden. Durch zeitsynchrones Ansteuern der primärseitigen Teilsysteme 98, 100, 102 mittels Ansteuer-Überträger 108, 110, 112 fließt durch jede Stufe ein Drittel des Eingangsstroms I_{E}. Um ein zeitsynchrones Ansteuern zu erreichen, sind die Ansteuer-Überträger 108, 110, 112 bei der hier beschriebenen Parallelschaltung auf einem gemeinsamen Kern. Die Ansteuer-Überträger 108, 110, 112 können auch als elektronische Halbleiter-Leistungstreiber (nicht abgebildet) ausgebildet sein. Die Teilsysteme 98, 100, 102 weisen eingangsseitige Induktivitäten L 98.1, L 100.1, L 102.1 auf, die über die Transistor-Leistungsschalter zumindest zeitweise parallel an der Eingangsspannung U_{E} liegen und somit eine Stromsymmetrierung des Gesamtsystems bewirken.

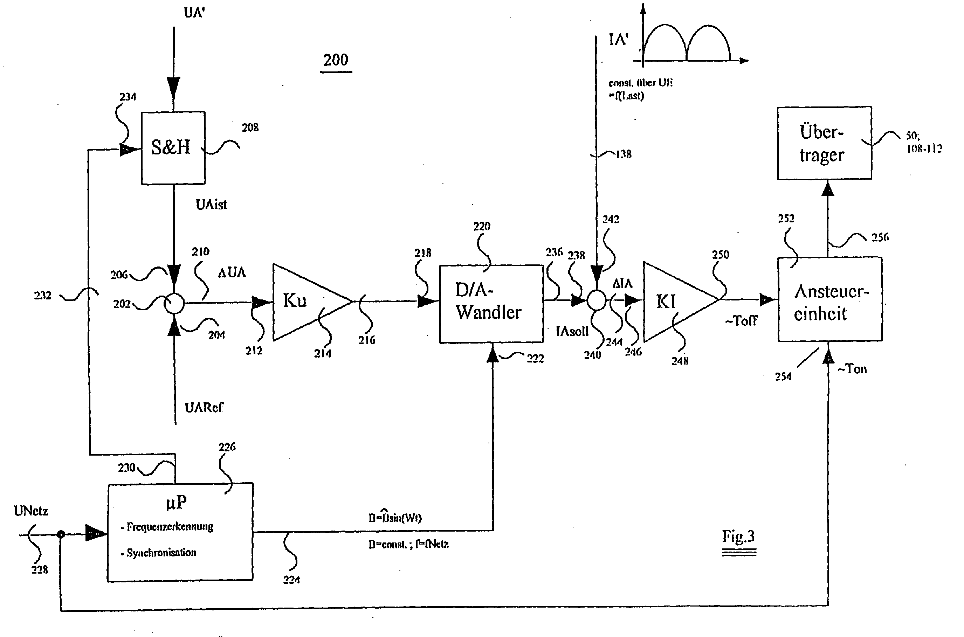

Die Regelung des Strom-Spannungswandlers soll anhand der Regelschaltung nach Fig. 3 erläutert werden.

In Fig. 3 ist eine Regelkreisanordnung zur Ansteuerung zumindest eines Teilsystems 16, 18, 20oder 98, 100, 102 des Strom-Spannungswandlers 10 oder 92 gemäß Fig. 1 oder 2 dargestellt. Der Regelkreis 200 weist eingangsseitig einen Spannungsvergleicher 202 auf, der mit einem ersten Eingang 204 mit einer Referenzspannung U_{ARef} und mit einem zweiten Eingang 206 über eine Abtastschaltung 208 wie Sample and Hold-Schaltung bzw. kontinuierliches Messen mit der Ausgangsspannung U_{A} zum Abgriff einer Ist-Spannung U_{Alst} verbunden ist. Die Ausgangsspannung U_{A} wird über ein nicht dargestelltes Messelement am Ausgang 24 des Strom-Spannungswandlers gemessen bzw, über die Bürdenspannung U_{A}' an der primären Transformatorwicklung TP1 - TP6 während der T_{OFF}-Phase.

Ein Ausgang 210 des Vergleichers 202 ist mit einem Eingang 212 eines Verstärkers 214 verbunden, um eine aus Ist-Spannung U_{Alst} und Referenz-Spannung U_{ARef} gebildete Differenzspannung ΔU_{A} zu verstärken. An einem Ausgang 216 des Verstärkers 214 liegt eine fehlerverstärkte Spannung K_{U} x ΔU_{A} an, die einem Eingang 218 eines multiplizierenden D/A-Wandlers 220 zugeführt wird. Ein weiterer Eingang 222 des D/A-Wandlers 220 ist mit einem Ausgang 224 eines Schaltkreises, vorzugsweise Mikrocontrolers 226 verbunden. Der Mikrocontroler 226 ist seinerseits über eine Zuleitung 228 mit einer Netzleitung bzw. mit Netzspannung U_{Netz} verbunden. Des Weiteren ist der Mikrocontroler 226 über einen Ausgang 230 und eine Triggerleitung 232 mit einem Eingang 234 der Abtast-Schaltung 208 verbunden.

Ein Ausgang 236 des D/A-Wandlers 220, an dem ein Soll-Strom I_{ASoll} anliegt, ist mit einem Eingang 238 eines Vergleichers 240 verbunden. Ein weiterer Eingang 242 des Vergleichers 240 ist über eine Zuleitung 138 mit dem Shunt 56 im Zweig der Drosselspule 220.1 zum Abgriff einer dem Ausgangsstrom I_{A} proportionalen Größe I_{A}' verbunden. Ein Ausgang 244 des Vergleichers ist mit einem Eingang 246 eines Stromverstärkers 248 verbunden. An einem Ausgang 250 des Verstärkers liegt eine verstärkte Stromdifferenz K₁ x ΔI_{A} an, die einer Ansteuereinheit 252 zugeführt wird und eine Regelgröße bildet. Die Ansteuereinheit weist ferner einen Eingang 254 für die Netz- bzw. Eingangsspannung zur T_{ON}-Steuerung sowie einen Ausgang 256 zur Ansteuerung der Transistor-Leistungsschalter T1 bzw. T6 über Ansteuerübertrager 50, 50', 50" bzw. 108 - 112 auf. Mit der Größe K₁ x ΔI_{A} wird die T_{OFF} -Zeit der Transistor-Leistungsschalter T1 - T6 geregelt bzw. gesteuert. Auch ohne U/I-Regler wird mittels T_{ON}-Steuerung und Vorgabe der T_{OFF}-Spannung als DC-Größe eine quasikonstante Ausgangsspannung mit Sinusstromaufnahme bei Wechselspannungs-Speisung und wechseIndem Eingangsbereich bzw. Ausgangslast erzielt.

Über die Eingangsleitung 228 ermittelt der Mikrocontroler 226 einerseits die Eingangsnetzspannung U_{Netz} sowie andererseits die Netzfrequenz f_{Netz}. Bei Gleichspannung als Netzspannung wird die Frequenz f_{Netz} = 0 erkannt. Es können beliebige Frequenzen, vorzugsweise f = 16 2/3, 50 bzw. 60 Hz erkannt werden. Aufgrund der ermittelten Netzfrequenz wird im Mikrocontroler 120 eine synthetische, ideale pulsierende (gleichgerichtete) Sinusfunktion abgelegt und generiert, die mit der Netzfrequenz synchronisiert ist und eine konstante Amplitude Bₘₐₓ aufweist.

Nach Erkennung und Abspeicherung der Zeitbasis startet die Bearbeitung mit einem Trigger-Nulldurchgang und synchronisiert darüber bei weiteren Nulldurchgängen. Synchronisationsimpulse, die zwischen den mathematischen Nulldurchgängen liegen, werden wegen eventueller Störgrößen ausgeblendet.

Der generierte Sinusverlauf wird über den Ausgang 224 an den Eingang 226 des D/A-Wandlers 220 ausgegeben. Gleichzeitig wird mit einem Synchronisationsimpuls, der zu jedem Halbwellen-Nulldurchgang ansteht, die Abtast-Schaltung 208 getriggert. In dem D/A-Wandler 220 wird nun die fehlerverstärkte Differenzspannung K_{U} x ΔU_{A} mit dem synthetischen Sinusverlauf Bmax x |sin (ωt)|, die mit der Netzspannung in Phase liegt, multipliziert. Am Ausgang liegt somit eine Sinus-bewertete spannungsfehlerverstärkte Größe an, die als Soll-Strom I_{ASoll} zur Ansteuerung der Transistor-Leistungsschalter T1 - T6 zur Verfügung steht. Im Gegensatz zu bekannten Regelkreisen bedarf es keines zusätzlichen Korrekturgliedes, da durch die Messung des Ausgangsstroms im primärseitigen Drosselzweig eine Größe zur Verfügung steht, die von Langzeit-Schwankungen der Eingangsspannung U_{E} unabhängig ist aber der Kurvenform der Nennfrequenz folgt (PFC).

Aufgrund der in dem Mikrocontroler generierten synthetischen Sinusfunktion kann diese auch als Referenz für eine Unter- bzw. Überspannungserkennung herangezogen werden. Die in dem Mikrocontroler generierte Sinusfunktion kann mittels einer Komparatorschaltung zum Netz synchronisiert werden. Erkennt der Mikrocontroler 226, dass die Eingangsspannung eine Gleichspannung ist, so wird an dem Ausgang 224 eine Konstantspannung B ausgegeben, so dass eine PFC-Bewertung entfällt.

Bezüglich des Ausgangsspannungs-Istwertes U_{Alst} ist anzumerken, dass dieser mit dem Trigger des Sinus-Null-Durchgangs abgefragt, in die Sample and Hold-Schaltung 208 abgespeichert und mit dem Referenzwert U_{ARef} verglichen wird.

Das beschriebene System aus Strom-Spannungswandler 10, 92 und erfindungsgemäßer Regelschaltung 200 kommt insbesondere im Bahnbereich an vier UIC-Spannungen, wie zum Beispiel 1000 VAC 16 2/2 Hz, 1500 VAC 50 Hz, 1500 VDC sowie 3000 VDC zur Anwendung. Da der Spannungswandler bzw. Regenerator einen weiten Eingangsspannungsbereich zulässt, wird die Problematik, ob Eingangswechselspannung oder Eingangsgleichspannung bzw. welche Frequenz die Eingangswechselspannung aufweist, durch die zuvor angegebenen Merkmale gelöst. Jedoch können alle vier Bereiche sowie Toleranzen (+- 30 %) und Langzeittransienten in einem Eingangsspannungsbereich abgearbeitet werden.

## Patentansprüche

1. Strom-Spannungswandler (10), insbesondere für hohe Eingangsspannungen, umfassend eine Primärseite (14), die mehrere in Reihe geschaltete Teilsysteme (16, 18, 20) mit jeweils zumindest einem Transistor-Leistungsschalter (T1, T2, T3) und jeweils einer eigenen zugeordneten Transformator-Primärwicklung (TP1, TP2, TP3) aufweist, sowie eine Sekundärseite (22), über die die Teilsysteme (16, 18, 20) an einen gemeinsamen Lastausgang (24) angekoppelt sind,
**dadurch gekennzeichnet,**
**dass** die in Reihe geschalteten Teilsysteme (16, 18, 20) je einen Zweig mit eingangsseitiger Induktivität (L16.1, L18.1, L20.1) und dem zumindest einen Transistor-Leistungsschalter (T1, T2, T3) aufweisen, dass die eingangsseitigen Induktivitäten (L16.1, L18.1, L20.1) zumindest zeitweise über die jeweiligen Transistor-Leistungsschalter (T1, T2, T3) elektrisch in Reihe an Eingangsspannung U_{E} liegen und eine Spannungssymmetrierung zwischen den Teilsystemen (16, 18, 20) bewirken und dass jeweils ein Ausgang der Teilsysteme (16, 18, 20) mit jeweils der Transformator-Primärwicklung (TP1, TP2, TP3) als Trenntransformator (TR1, TR2, TR3) zur Stromspeisung verbunden ist.

2. Strom-Spannungswandler (92), insbesondere für hohe Eingangsströme, umfassend eine Primärseite (96), die mehrere parallel geschaltete Teilsysteme (98, 100, 102) mit jeweils zumindest einem Transistor-Leistungsschalter (T4, T6, T7) und jeweils einer eigenen zugeordneten Transformator-Primärwicklung (TP4, TP5, TP6) aufweist, sowie eine Sekundärseite (104), über die die Teilsysteme (98, 100, 102) an einen gemeinsamen Lastausgang (106) angekoppelt sind,
**dadurch gekennzeichnet,**
**dass** die parallel geschalteten Teilsysteme (98, 100, 102) je einen Zweig aus einer eingangsseitigen Induktivität (L98.1, L100.1, L102.1) und dem zumindest einen Transistor-Leistungsschalter (T4, T6, T7) aufweisen, dass die eingangsseitigen Induktivitäten (L98.1, L100.1, L102.1) zumindest zeitweise über die jeweiligen Transistor-Leistungsschalter (T4, T5, T6) elektrisch parallel an Eingangsspannung U_{E} liegen und eine Stromsymmetrierung zwischen den Teilsystemen bewirken und dass jeweils ein Ausgang der Teilsysteme mit jeweils der Transformator-Primärwicklung (TP4, TP5, TP6) als Trenntransformator (TR4, TR5, TR6) zur Stromspeisung verbunden ist.

3. Strom-Spannungswandler nach Anspruch 1 oder 2,
**dadurch gekennzeichnet,**
**dass** die Trenntransformatoren TR1 - TR3 bzw. TR4 - TR6 als Stromtransformatoren ausgebildet sind und jeweils einen separaten magnetischen Kern aufweisen.

4. Strom-Spannungswandler nach einem oder mehreren der zuvor genannten Ansprüche,
**dadurch gekennzeichnet,**
**dass** die Teilsysteme (16, 18, 20, 98, 100, 102) als SEPIC-Wandler (26, 26', 26") oder Regenerator ausgebildet sind.

5. Strom-Spannungswandler nach einem oder mehreren der zuvor genannten Ansprüche,
**dadurch gekennzeichnet,**
**dass** nur ein Teilsystem, vorzugsweise das mit Bezugspotential (Masse) verbundene Teilsystem, mit einem Regelkreis (200) verbunden ist.

6. Strom-Spannungswandler nach einem oder mehreren der zuvor genannten Ansprüche,
**dadurch gekennzeichnet,**
**dass** der Regelkreis (200) einen mit der Netzspannung verbundenen Schaltkreis (226) zur Erfassung der Netzspannung und/oder der Netzfrequenz aufweist, dass der Schaltkreis (226) entsprechende Signale an den Regelkreis (200) weitergibt, so dass der Stroin-Spannungswandler (10, 92) in Abhängigkeit von der Eingangsspannung entweder als DC-Wandler oder als AC-Wandler mit PFC-Bewertung adaptiert ist.

7. Strom-Spannungswandler nach einem oder mehreren der zuvor genannten Ansprüche,
**dadurch gekennzeichnet,**
**dass** der Wandler an die internationalen UIC-Spannungen , vorzugsweise 1000 VAC 16,2/3 Hz, 1500 VAC 50 Hz bzw. 1500 VDC bis 3000 VDC, ohne Umschaltung anschließbar ist.

8. Strom-Spannungswandler nach einem oder mehreren der zuvor genannten Ansprüche,
**dadurch gekennzeichnet,**
**dass** zumindest jeweils einer weiteren, mit der jeweiligen eingangsseitigen Induktivität wie Drosselspule (L16.1, L18.1, 20.1; L98.1, L100.1) magnetisch gekoppelten Induktivität wie Drosselspule (L16.2, L18.2, L20.2; L98.2, L100.2, L102.2) ein Messelement wie Shunt zugeordnet ist, an dem eine dem Ausgangsstrom I_{A} proportionale Größe I_{A}' abgreifbar ist.

9. Strom-Spannungswandler nach einem oder mehreren der zuvor genannten Ansprüche,
**dadurch gekennzeichnet,**
**dass** die Transformatoren (TR1, TR2, TR3) eine Leistung aufweisen, die der 1/Nfachen Gesamtleistung entspricht, wobei N der Anzahl der in Reihe oder parallel geschalteten Teilsysteme entspricht.

10. Strom-Spannungswandler nach einem oder mehreren der zuvor genannten Ansprüche,
**dadurch gekennzeichnet,**
**dass** der Strom-Spannungswandler multiple Ausgangsspannungen aufweist, wobei die Ausgangsspannungen der kaskadierten Strom-Spannungswandler (10, 92) über Steuerung der T_{On}- Zeit proportional 1/U_{E} vorgesteuert und über T_{Off} einstellbar bzw. regelbar sind.

11. Strom-Spannungswandler nach einem oder mehreren der zuvor genannten Ansprüche,
**dadurch gekennzeichnet,**
**dass** die in den Teilsystemen (16, 18, 20) enthaltenen Transistor-Leistungsschalter (T1 - T6) über ein Ansteuerglied wie Ansteuerüberträger (50, 50', 50") mit einer T_{On}-Zeitfläche ansteuerbar sind.

12. Strom-Spannungswandler nach einem oder mehreren der zuvor genannten Ansprüche,
**dadurch gekennzeichnet,**
**dass** die Primärwicklung (TP1, TP2, TP3) des Trenntransformators (TR1, TR2, TR3) über eine Diode (32, 32', 32") an einen jeweiligen Ausgang des SEPIC-Wandlers (26, 26', 26") stromspeisend angekoppelt ist.

13. Strom-Spannungswandler nach einem oder mehreren der zuvor genannten Ansprüche,
**dadurch gekennzeichnet,**
**dass** zumindest einer der Primärwicklungen (TP1, TP2, TP3) mehrere Sekundärwicklungen (TS1.1, TS1.2,TS1.3) mit vorzugsweise unterschiedlichen Windungszahlen zur Bildung multipler Ausgänge zugeordnet sind.

14. Regelkreis (200) für einen Strom-Spannungswandler (10, 92), insbesondere SEPIC-Wandler, nach zumindest einem der Ansprüche 1 bis 13, umfassend einen Spannungsregler mit Spannungsvergleicher (200) und Spannungsverstärker (214), einen Stromregler mit Stromvergleicher (240) und Stromverstärker (248) sowie ein zwischen Spannungsregler und Stromregler angeordnetes Korrekturglied (220),
**dadurch gekennzeichnet,**
**dass** der Regelkreis einen Schaltkreis (226) zur Erfassung der Netzspannung und/oder Netzfrequenz aufweist, dass der Schaltkreis (226) mit einer Abtastschaltung (208) verbunden ist, die mit einem Eingang an einer der Ausgangsspannung U_{A} proportionalen Größe U_{A}' liegt und mit einem Ausgang mit dem Spannungsvergleicher (202) verbunden ist und dass der Spannungsregler ausgangsseitig mit einem ersten Eingang (218) eines D/A-Wandlers (220) verbunden ist, der seinerseits mit einem zweiten Eingang (222) mit einem Ausgang (224) des Schaltkreises (226) und ausgangsseitig mit einem Eingang (238) des Stromvergleichers (240) des Stromreglers verbunden ist.

15. Regelkreis nach Anspruch 14,
**dadurch gekennzeichnet,**
**dass** der Schaltkreis (226) eine Schaltung zur Erfassung der Netzspannung und/oder Netzfrequenz, eine Schaltung zur Erzeugung einer synthetischen Sinusfunktion, eine Triggerschaltung sowie eine Synchronisationsschaltung aufweist.

16. Regelkreis nach Anspruch 14,
**dadurch gekennzeichnet,**
**dass** am Ausgang (224) des Schaltkreises (226) ein synthetischer Sinus B = Bmax |sin (ωt)| mit konstanter Amplitude B zur Verfügung steht, der die tatsächliche Netzfrequenz repräsentiert.

17. Regelkreis nach einem der Ansprüche 14 bis 16,
**dadurch gekennzeichnet,**
**dass** am Ausgang (230) des Schaltkreises (226) ein Triggersignal für die Abtast-Schaltung (208) zur Verfügung steht.

18. Regelkreis nach einem der Ansprüche 14 bis 17,
**dadurch gekennzeichnet, dass** in dem Schaltkreis (226) vorprogrammierte Sinusfunktionen abgelegt sind.

19. Verfahren zur Regelung eines Strom-Spannungswandlers, nach zumindest einem der Ansprüche 1 bis 13, wobei Ausgangsspannung U_{A} und Ausgangsstrom I_{A} erfasst und mit Sollgrößen zur Erzeugung einer Regelgröße verglichen werden,
**dadurch gekennzeichnet,**
**dass** die Netzspannung und/oder Netzfrequenz erfasst wird, dass in Abhängigkeit der Netzfrequenz ein Triggersignal zur Abtastung der Ausgangsspannung erzeugt wird, dass in Abhängigkeit der Netzfrequenz ein synthetischer Sinus bzw. eine konstante digitale Größe erzeugt wird, dass die erzeugte sinusförmige oder konstante digitale Größe in eine analoge Größe umgewandelt und mit einer verstärkten Fehlerspannung K_{U} x ΔU_{A} zur Erzeugung einer Sollgröße für den Ausgangsstrom I_{A} multipliziert wird.

20. Verfahren nach Anspruch 19,
**dadurch gekennzeichnet,**
**dass** die primären Teilsysteme (16, 18, 20; 98, 100, 102) im nicht stromlückenden Betrieb betrieben werden.

21. Verfahren nach Anspruch 19,
**dadurch gekennzeichnet,**
**dass** die PFC-Bewertung der kaskadierten Teilsysteme (16, 18, 20; 98, 100, 102) einstufig an einem Teilsystem (20, 102) erfolgt.

22. Verfahren nach Anspruch 19,
**dadurch gekennzeichnet,**
**dass** die Eingangsspannung U_{E} ausgangsseitig über die T_{On}-Zeit gemessen wird.

23. Verfahren nach Anspruch 19,
**dadurch gekennzeichnet,**
**dass** eine der Ausgangsspannung U_{A} proportionale Größe U_{A}' und eine dem Ausgangsstrom I_{A} proportionale Größe I_{A}' primärseitig gemessen werden.

24. Verfahren nach Anspruch 19,
**dadurch gekennzeichnet,**
**dass** eine Korrektur des Regelkreises über die Eingangsspannung U_{E} entfällt.

## Claims

1. A current-to-voltage converter (10), particularly for high input voltages, comprising a primary side (14), having a plurality of serially connected partial systems (16, 18, 20) each comprising at least one transistor power-switch (T1, T2, T3) and one separate associated transformer primary winding (TP1, TP2, TP3), as well as a secondary side (22), over which the partial systems (16, 18, 20) are coupled into a common load output (24),
**characterized in**
**that** each of the serially connected partial systems (16, 18, 20) comprises a branch with an input inductance (L16.1, L18.1, L20.1) and the at least one transistor power-switch (T1, T2, T3), that the input inductances (L16.1, L18.1, L20.1) are applied electrically in series to an input voltage U_{E} at least temporarily over the corresponding transistor power-switches (T1, T2, T3) and to produce a balanced voltage between the partial systems (16, 18, 20) and that one output each of the partial systems (16, 18, 20) is connected with respectively one transformer primary winding (TP1, TP2, TP3) acting as isolating transformer (TR1, TR2, TR3) for current supply.

2. A current-to-voltage converter (92), particularly for high input voltages, comprising a primary side (96), having a plurality of parallel connected partial systems (98, 100, 102) each comprising at least one transistor power-switch (T4, T6, T7) and one separate associated transformer primary winding (TP4, TP5, TP6), as well as a secondary side (104), over which the partial systems (98, 100, 102) are coupled into a common load output (106),
**characterized in**
**that** each of the parallel connected partial systems (98, 100, 102) comprises a branch with an input inductance (L98.1, L100.1, L102.1) and the at least one transistor circuit breaker (T4, T6, T7), that the input inductances (L98.1, L100.1, L 102.1) are applied electrically parallel to input voltage U_{E} at least temporarily over the corresponding transistor power-switches (T4, T6, T7) and to produce a balanced current between the partial systems (98, 100, 102) and that one output each of the partial systems (98, 100, 102) is connected with respectively one transformer primary winding (TP4, TP6, TP7) acting as isolating transformer (TR4, TR5, TR6) for current supply.

3. A current-to-voltage converter according to claim 1 or 2,
**characterized in**
**that** the isolating transformers TR1-TR3 and TR4-TR6, respectively, are configured as current transformers each having a separate magnetic core.

4. A current-to-voltage converter according to one or more of the preceding claims,
**characterized in**
**that** the partial systems (16, 18, 20, 98, 100, 102) are configured as a SEPIC converter (26, 26', 26") or as a regenerator.

5. A current-to-voltage converter according to one or more of the preceding claims,
**characterized in**
**that** only a partial system, preferably the partial system connected to a reference potential (ground), is connected with a closed-loop control circuit (200).

6. A current-to-voltage converter according to one or more of the preceding claims,
**characterized in**
**that** the closed-loop control circuit (200) includes a circuit (226) connected to line voltage in order to detect the line voltage and/or the line frequency, that the circuit (226) transfers corresponding signals to the closed-loop control circuit (200) so that, depending on the input voltage, the current-to-voltage converter (10, 92) is adapted as DC converter or as AC converter with PFC analysis.

7. A current-to-voltage converter according to one or more of the preceding claims,
**characterized in**
**that** the converter is connectable, without switchover, to international UIC-voltages, preferably 1000 VAC 16,2/3 Hz, 1500 VAC 50 Hz and 1500 VDC to 3000 VDC, respectively.

8. A current-to-voltage converter according to one or more of the preceding claims,
**characterized in**
**that** a measuring element such as a shunt is associated with at least one additional inductance such as the reactance coil (L16.2, L18.2, L20.2; L98.2, L100.2, L102.2), which is magnetically coupled with the corresponding input inductance such as reactance coil (L16.1, L18.1, L20.1; L98.1, L100.1, L102.1), whereby a value I_{A'} proportional to output current I_{A} can be sampled at said measuring element.

9. A current-to-voltage converter according to one or more of the preceding claims,
**characterized in**
**that** the transformers (TR1, TR2, TR3) produce an output corresponding to 1/N times the total output, whereby N represents the number of serially or parallel connected partial systems.

10. A current-to-voltage converter according to one or more of the preceding claims,
**characterized in**
**that** the current-to-voltage converter has multiple output voltages, whereby the output voltages of the cascaded current-to-voltage converters (10, 92) are precontrolled proportional to 1/U_{E} by T_{On} time and set and adjusted through T_{Off}.

11. A current-to-voltage converter according to one or more of the preceding claims,
**characterized in**
**that** the transistor circuit breakers (T1-T6) included in the partial systems (16, 18, 20) can be activated over a trigger element such as an activation transmitter (50, 50', 50") by means of a T_{On} time per unit area.

12. A current-to-voltage converter according to one or more of the preceding claims,
**characterized in**
**that** the primary winding (TP1, TP2, TP3) of the isolating transformer (TR1, TR2, TR3) is coupled over a diode (32, 32', 32") to a corresponding output of the SEPIC converter (26, 26', 26") for power supply.

13. A current-to-voltage converter according to one or more of the preceding claims,
**characterized in**
**that** at least one of the primary windings (TP1, TP2, TP3) is associated with several secondary windings (TS1.1, TS1.2, TS1.3), which preferably have different numbers of turns in order to create multiple outputs.

14. Closed-loop control circuit (200) for a current-to-voltage converter (10, 92), in particular SEPIC-converter, according to at least one of claims 1 to 13, comprising a voltage regulator with voltage comparator (200) and voltage amplifier (214), a current regulator with current comparator (240) and current amplifier (248) as well as an adjustment element (220) arranged between voltage regulator and current regulator,
**characterized in**
the closed-loop control circuit comprises a circuit (226) to detecting the line voltage and/or line frequency, that the circuit (226) is connected to a sampling circuit (208) applying with an input to a value U_{A'}, proportional to output voltage U_{A}, and being connected with an output to the voltage comparator (202), and that the voltage regulator at its output side is connected to a first input (218) of a D/A converter (220) which in turn is connected with a second input (222) to an output (224) of the circuit (226) and at its output side to an input (238) of the current comparator (240) of the current regulator.

15. Closed-loop control circuit according to claim 14,
**characterized in**
**that** the circuit (226) comprises a circuit to detect the line voltage and/or line frequency, a circuit to generate a synthetic sine function, a trigger circuit as well as a synchronizing circuit.

16. Closed-loop control circuit according to claim 14,
**characterized in**
**that** at the output (224) of the circuit (226) a synthetic sine B = Bmax |sin (ωt)| with constant amplitude B is provided representing the actual supply frequency.

17. Closed-loop control circuit according to one of claims 14-16,
**characterized in**
**that** at the output (230) of the circuit (226) a trigger signal for the sampling circuit (208) is provided.

18. Closed-loop control circuit according to one of claims 14-17,
**characterized in**
**that** preprogrammed sine functions are stored in the circuit (226).

19. Method for controlling a current-to-voltage converter, according to at least one of claims 1 to 13, whereby output voltage U_{A} and an output current I_{A} are detected and compared with setting values in order to generate a controlled variable,
**characterized in**
**that** the line voltage and/or a line frequency are detected, that a trigger signal is generated as a function of the line frequency in order to sample the output voltage, that a synthetic sine and/or a constant digital value is generated as a function of the line frequency, that the generated sinusoidal or constant digital value is converted into an analogue value and multiplied with an amplified error voltage K_{U} x ΔU_{A} in order to generate a setting value for the output current I_{A}.

20. Method according to clam 19,
**characterized in**
**that** the primary partial systems (16, 18, 20; 98, 100, 102) are operated with non-pulsating current.

21. Method according to clam 19,
**characterized in**
**that** the PFC-analysis of the cascaded partial systems (16, 18, 20; 98, 100, 102) is performed in one stage on one partial system (20, 102).

22. Method according to clam 19,
**characterized in**
**that** the input voltage U_{E} is measured on the output side via T_{On}-time.

23. Method according to clam 19,
**characterized in**
**that** a value U_{A'} proportional to the output voltage U_{A} and a value I_{A'} proportional to the output current I_{A} are measured on the primary side.

24. Method according to clam 19,
**characterized in**
**that** a correction of the closed-loop control circuit via the input voltage U_{E} is unnecessary.

## Revendications

1. Convertisseur de courant-tension (10), en particulier pour tensions d'entrée élevées, comprenant un côté primaire (14) avec plusieurs sous-systèmes connectés en série (16, 18, 20) ayant chacun au moins un sectionneur de puissance à transistor (T1, T2, T3) et chacun un enroulement primaire de transformateur (TP1, TP2, TP3) associé propre, ainsi qu'un côté secondaire (22) couplant les sous-systèmes (16, 18, 20) à une sortie de charge commune (24),
**caractérisé en ce que**
les sous-systèmes connectés en série (16, 18, 20) possèdent chacun une branche avec une inductance du côté entrée (L16.1, L18.1, L20.1) et le au moins un sectionneur de puissance à transistor (T1, T2, T3), les inductances du côté entrée (L16.1, L18.1, L20.1) sont soumises au moins temporairement en série à une tension d'entrée U_{E} par les sectionneurs de puissance à transistor (T1, T2, T3) et opèrent un équilibrage de tension entre les sous-systèmes (16, 18, 20), et une sortie de chacun des sous-systèmes (16, 18, 20) est reliée à un des enroulements primaires de transformateur (TP1, TP2, TP3) pour former un transformateur de coupure (TR1, TR2, TR3) par rapport à l'alimentation en courant.

2. Convertisseur de courant-tension (92), en particulier pour courants d'entrée élevés, comprenant un côté primaire (96) avec plusieurs sous-systèmes connectés en parallèle (98, 100, 102) ayant chacun au moins un sectionneur de puissance à transistor (T4, T6, T7) et chacun un enroulement primaire de transformateur (TP4, TP5, TP6) associé propre, ainsi qu'un côté secondaire (104) couplant les sous-systèmes (98, 100, 102) à une sortie de charge commune (106),
**caractérisé en ce que**
les sous-systèmes connectés en parallèle (98, 100, 102) possèdent chacun une dérivation partant d'une inductance du côté entrée (L98.1, L100.1, L102.1) et d'au moins un sectionneur de puissance à transistor (T4, T6, T7), les inductances du côté entrée (L98.1, L100.1, L102.1) sont soumises au moins temporairement en parallèle à une tension d'entrée U_{E} par les sectionneurs de puissance à transistor (T4, T5, T6) et opèrent un équilibrage de courant entre les sous-systèmes, et une sortie de chacun des sous-systèmes est reliée à un des enroulements primaires de transformateur (TP4, TP5, TP6) pour former un transformateur de coupure (TR4, TR5, TR6) par rapport à l'alimentation en courant.

3. Convertisseur de courant-tension selon la revendication 1 ou 2,
**caractérisé en ce que**
les transformateurs de séparation TR1 à TR3 ou TR4 à TR6 sont des transformateurs d'intensité et possèdent chacun un induit magnétique séparé.

4. Convertisseur de courant-tension selon une ou plusieurs des revendications précédentes,
**caractérisé en ce que**
les sous-systèmes (16, 18, 20, 98, 100, 102) sont des convertisseurs SEPIC (26, 26', 26") ou des régénérateurs.

5. Convertisseur de courant-tension selon une ou plusieurs des revendications précédentes,
**caractérisé en ce qu'**
un seul sous-système, de préférence le sous-système relié avec le potentiel de référence (masse), est relié avec un circuit de régulation (200).

6. Convertisseur de courant-tension selon une ou plusieurs des revendications précédentes,
**caractérisé en ce que**
le circuit de régulation (200) possède un circuit fonctionnel (226) relié avec la tension du réseau pour enregistrer la tension du réseau et/ou la fréquence du réseau, et le circuit fonctionnel (226) transmet des signaux correspondants au circuit de régulation (200), de sorte que le convertisseur de courant-tension (10, 92) est adapté selon la tension d'entrée comme convertisseur CC ou comme convertisseur CA à évaluation de correction de facteur de puissance.

7. Convertisseur de courant-tension selon une ou plusieurs des revendications précédentes,
**caractérisé en ce que**
le convertisseur peut être connecté sans commutation aux tensions de l'UIC, de préférence 1000 V CA 16,2/3 Hz, 1500 V CA 50 Hz ou 1500 V CC à 3000 V CC.

8. Convertisseur de courant-tension selon une ou plusieurs des revendications précédentes,
**caractérisé en ce qu'**
à au moins une autre inductance telle qu'une bobine de choc (L16.2, L18.2, L20.2, L98.2, L100.2, L102.2) couplée magnétiquement avec l'inductance correspondante du côté entrée telle qu'une bobine de choc (L16.1, L18.1, L20.1, L98.1, L100.1), on associe un élément de mesure tel qu'un shunt sur lequel une grandeur I_{A}' proportionnelle au courant de sortie I_{A} peut être détectée.

9. Convertisseur de courant-tension selon une ou plusieurs des revendications précédentes,
**caractérisé en ce que**
les transformateurs (TR1, TR2, TR3) possèdent une puissance qui correspond à 1/N de la puissance totale, N étant le nombre de sous-systèmes connectés en série ou en parallèle.

10. Convertisseur de courant-tension selon une ou plusieurs des revendications précédentes,
**caractérisé en ce que**
le convertisseur de courant-tension possède de multiples tensions de sortie, les tensions de sortie des convertisseurs de courant-tension (10, 92) en cascade étant pilotées en contrôlant le délai T_{On} de manière proportionnelle à 1/UE et pouvant être réglées ou régulées par T_{Off}.

11. Convertisseur de courant-tension selon une ou plusieurs des revendications précédentes,
**caractérisé en ce que**
les sectionneurs de puissance à transistor (T1 à T6) contenus dans les sous-systèmes (16, 18, 20) peuvent être commandés par un élément de commande tel qu'un transmetteur de commande (50, 50', 50") avec une plage temporelle Ton.

12. Convertisseur de courant-tension selon une ou plusieurs des revendications précédentes,
**caractérisé en ce que**
l'enroulement primaire (TP1, TP2, TP3) du transformateur de coupure (TR1, TR2, TR3) est couplé de manière conductrice à une sortie correspondante du convertisseur SEPIC (26, 26', 26") par une diode (32, 32', 32").

13. Convertisseur de courant-tension selon une ou plusieurs des revendications précédentes,
**caractérisé en ce qu'**
à au moins un des enroulements primaires (TP1, TP2, TP3) on associe plusieurs enroulements secondaires (TS1.1, SI1.2, TS1.3) avec de préférence des nombres de spires différents pour former des sorties multiples.

14. Circuit de régulation (200) pour un convertisseur de courant-tension (10,92), en particulier un convertisseur SEPIC, selon au moins une des revendications 1 à 13, comprenant un régulateur de tension avec un comparateur de tension (200) et un amplificateur de tension (214), un régulateur de courant avec un comparateur de courant (240) et un amplificateur de courant (248) ainsi qu'un élément correcteur (220) disposé entre le régulateur de tension et le régulateur de courant,
**caractérisé en ce que**
le circuit de régulation possède un circuit fonctionnel (226) pour enregistrer la tension du réseau et/ou la fréquence du réseau, le circuit fonctionnel (226) est relié à un circuit d'échantillonnage (208) qui reçoit par une entrée une grandeur U_{A}' proportionnelle à la tension de sortie U_{A} et est relié par une sortie avec un comparateur de tension (202), et le régulateur de tension est relié du côté sortie à une première entrée (218) d'un convertisseur N/A (220), relié de son côté par une deuxième entrée (222) avec une sortie (224) du circuit fonctionnel (226) et du côté sortie avec une entrée (238) du comparateur de courant (240) du régulateur de courant.

15. Circuit de régulation selon la revendication 14,
**caractérisé en ce que**
le circuit fonctionnel (226) possède un circuit pour enregistrer la tension du réseau et/ou la fréquence du réseau, un circuit pour générer une fonction sinusoïdale synthétique, un circuit de déclenchement et un circuit de synchronisation.

16. Circuit de régulation selon la revendication 14,
**caractérisé en ce que**
la sortie (224) du circuit fonctionnel (226) émet une sinusoïde synthétique B = Bmax |sin (ωt)| d'amplitude constante B qui représente la fréquence effective du réseau.

17. Circuit de régulation selon une des revendications 14 à 16,
**caractérisé en ce que**
la sortie (230) du circuit fonctionnel (226) émet un signal de déclenchement pour le circuit d'échantillonnage (208).

18. Circuit de régulation selon une des revendications 14 à 17,
**caractérisé en ce que**
le circuit fonctionnel (226) contient des fonctions sinusoïdales préprogrammées.

19. Procédé de régulation d'un convertisseur de courant-tension selon au moins une des revendications 1 à 13, selon lequel la tension de sortie U_{A} et le courant de sortie I_{A} sont enregistrés et comparés avec des grandeurs de consigne pour générer une grandeur de régulation,
**caractérisé en ce que**
la tension du réseau et/ou la fréquence du réseau sont enregistrées, un signal de déclenchement est généré en fonction de la fréquence du réseau pour échantillonner la tension de sortie, une grandeur numérique sinusoïdale ou constante synthétique est générée en fonction de la fréquence du réseau, et la grandeur numérique sinusoïdale ou constante générée est convertie en une grandeur analogique et multipliée par une tension de défaut amplifiée Ku x ΔU_{A} pour générer une grandeur de consigne pour le courant de sortie I_{A}.

20. Procédé selon la revendication 19,
**caractérisé en ce que**
les sous-systèmes primaires (16, 18, 20; 98, 100, 102) sont exploités en mode non discontinu.

21. Procédé selon la revendication 19,
**caractérisé en ce que**
l'évaluation de la correction de facteur de puissance des sous-systèmes en cascade (16, 18, 20; 98, 100, 102) se fait en une étape au niveau d'un sous-système (20, 102).

22. Procédé selon la revendication 19,
**caractérisé en ce que**
la tension d'entrée U_{E} est mesurée du côté sortie pendant le délai Ton.

23. Procédé selon la revendication 19,
**caractérisé en ce qu'**
une grandeur U_{A}' proportionnelle à la tension de sortie U_{A} et une grandeur I_{A}' proportionnelle au courant de sortie I_{A} sont mesurées du côté primaire.

24. Procédé selon la revendication 19,
**caractérisé en ce qu'**
il n'y a pas de correction du circuit de régulation par la tension d'entrée U_{E}.
